# EUROPEAN PATENT SPECIFICATION

(11) **EP 4 451 657 B1**
(45) Date of publication and mention of the grant of the patent: **15.07.2026**
(21) Application number: 24167412.6
(22) Date of filing: 28.03.2024
(51) Int. Cl.: H04M 1/18, H04W 48/16, H04W 4/10, G08G 3/00, B63B 49/00

(54) **RADIO DEVICE, COMMUNICATION CONTROL METHOD, AND COMMUNICATION CONTROL PROGRAM FOR DIGITAL SELECTIVE CALLING DSC**
FUNKVORRICHTUNG, KOMMUNIKATIONSSTEUERUNGSVERFAHREN UND KOMMUNIKATIONSSTEUERUNGSPROGRAMM FÜR DIGITALEN SELEKTIVRUF (DSC)
DISPOSITIF RADIO, PROCÉDÉ DE COMMANDE DE COMMUNICATION ET PROGRAMME DE COMMANDE DE COMMUNICATION POUR APPEL SÉLECTIF NUMÉRIQUE (DSC)

(30) Priority: 21.04.2023 JP 2023070500
(43) Date of publication of application: 23.10.2024
(73) Proprietor: Icom Incorporated, Osaka 547-0004 (JP)
(72) Inventor: ISHIDA, Remito, OSAKA-SHI, 5470004 (JP); NISHIGUCHI, Yasuhiro, OSAKA-SHI, 5470004 (JP); YABUMOTO, Kosuke, OSAKA-SHI, 5470004 (JP)
(74) Representative: Plasseraud IP

(56) References cited:
- STANDARD EUROPEAN: "ETSI EN 300 338-1 V1.6.1: Technical characteristics and methods of measurement for equipment for generation, transmission and reception of Digital Selective Calling (DSC) in the maritime MF, MF/HF and/or VHF mobile service; Part 1: Common requirements", 28 February 2021 (2021-02-28), pages 1 - 43, XP093201297, Retrieved from the Internet <URL:https://www.etsi.org/deliver/etsi_en/300300_300399/30033801/01.06.01_60/en_30033801v010601p.pdf> [retrieved on 20240903]
- ETSI: "ETSI EN 300 338-8 V1.1.1: Technical characteristics and methods of measurement for equipment for generation, transmission and reception of Digital Selective Calling (DSC) in the maritime MF, MF/HF and/or VHF mobile service; Part 8: Enabling DSC radio equipment with remote control capabilities", 28 February 2022 (2022-02-28), pages 1 - 94, XP093201298, Retrieved from the Internet <URL:https://www.etsi.org/deliver/etsi_en/300300_300399/30033808/01.01.01_60/en_30033808v010101p.pdf> [retrieved on 20240903]

## Description

### Technical Field

The present invention relates to, for example, a radio device having a digital selective calling (DSC) function.

### Background Art

In some cases of vessel radio communication, a radio device is used that can perform various operations related to a DSC function with use of an operation terminal. For example, Patent Literature 1 discloses that a user performs, with use of a handset terminal, operations such as an operation of setting, for example, an order in which other vessels near a vessel of the user are displayed and an operation of initiating radio communication with another vessel specified.

Meanwhile, as DSC standards related to operation of a case where a plurality of operation terminals are connected to a main unit of a radio device, ETSI EN300 338-1 and ETSI EN300 338-8 have been known. Document 338-1 is: "ETSI EN 300 338-1 V1.6.1: Technical characteristics and methods of measurement for equipment for generation, transmission and reception of Digital Selective Calling (DSC) in the maritime MF, MF/HF and/or VHF mobile service; Part 1: Common requirements", 1 February 2021, pages 1-43, URL:https://www.etsi.org/deliver/etsi_en/ 300300_300399/30033801/01.06.01_60/en_30033801v0106 01p.pdf. Document: 338-8 is: "ETSI EN 300 338-8 V1.1.1: Technical characteristics and methods of measurement for equipment for generation, transmission and reception of Digital Selective Calling (DSC) in the maritime MF, MF/HF and/or VHF mobile service; Part 8: Enabling DSC radio equipment with remote control capabilities", 1 February 2022, pages 1-94, URL:https://www.etsi.org/deliver/etsi_en/ 300300_300399/30033808/01.01.01_60/en_30033808v0101 01p.pdf. In such DSC standards, it is specified to set respective unique IDs to a plurality of operation terminals connected to a single main unit of a radio device and to set the ID of a high-priority terminal that can be operated preferentially over the other terminals to "0".

### Citation List

### [Patent Literature]

[Patent Literature 1]
Japanese Patent Application Publication Tokukai No. 2019-8557

### Summary of Invention

### Technical Problem

Conventionally, IDs of a plurality of operation terminals have been set in a free manner. This raises, for example, a problem that duplicate IDs are set, a problem that a high-priority terminal is absent, and other problems. In order to prevent such problems, measures such as strict management in setting the IDs are required. This makes it difficult to set the IDs.

It is an object of an aspect of the present invention to easily and reliably set IDs of a plurality of operation terminals connected to a main unit of a radio device.

### Solution to Problem

In order to solve the foregoing problem, a radio device in accordance with claim 1 is provided in an aspect of the present invention. A method according to claim 6 is provided in a second aspect.

### Advantageous Effects of Invention

An aspect of the present invention makes it possible to easily and reliably set IDs of a plurality of operation terminals connected to a main unit of a radio device.

### Brief Description of Drawings

Fig. 1 is a block diagram illustrating a configuration of a radio device in accordance with an embodiment of the present invention.
Fig. 2 is a front view illustrating an appearance configuration of an operation terminal connected to a main device of the radio device.
Fig. 3 is a view illustrating a menu screen which is displayed on a display section of the operation terminal and which enables selection of various settings related to IDs of operation terminals.
Fig. 4 is a view illustrating a selection screen which is displayed on the display section and which enables selection of the operation terminal or an external operation terminal on which high priority is to be set.
Fig. 5 is a view illustrating an ID display screen which is displayed on the display section and which displays IDs of the operation terminals.
Fig. 6 is a flowchart showing a process procedure for change of the IDs of the operation terminals connected to the radio device.
Fig. 7 is a flowchart showing a process procedure for acceptance of operations from the operation terminals and the external operation terminal.

### Description of Embodiments

### [Embodiment]

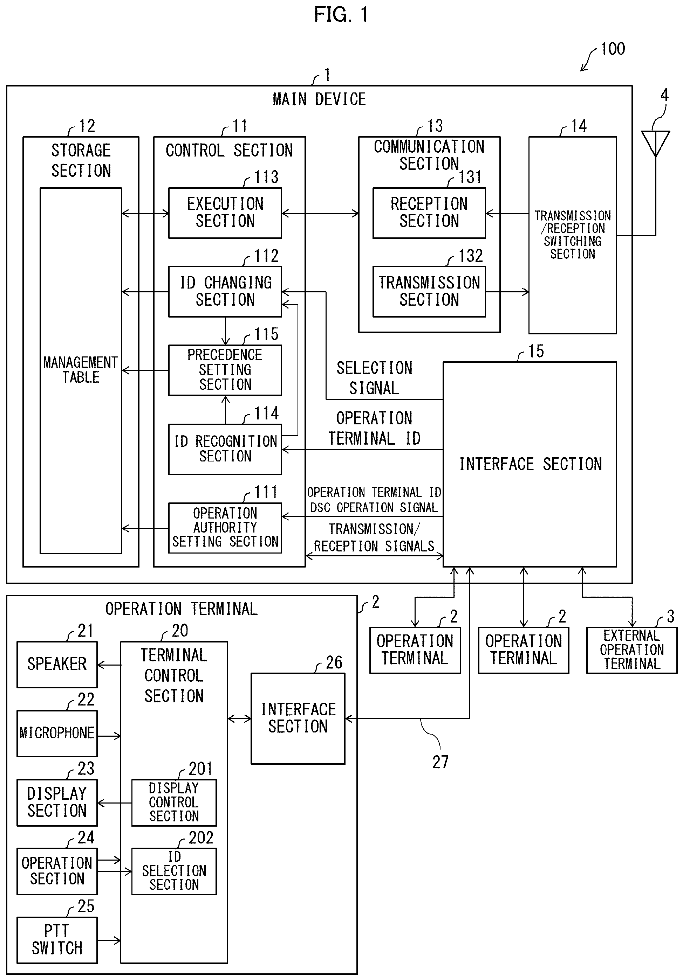

With reference to Figs. 1 to 6, the following will describe an embodiment of the present invention.

### <Outline of Radio device>

Fig. 1 is a block diagram illustrating a configuration of a radio device 100 in accordance with an embodiment of the present invention.

The radio device 100 has a digital selective calling (DSC) function as well as a maritime radio communication function for performing communication with use of a maritime radio system such as marine VHF radio.

The "maritime radio communication" refers to radio communications, except the DSC, between a terrestrial radio station and a radio station, such as a vessel station, that moves on the sea and between radio stations, such as vessel stations, that move on the sea. In addition, a maritime radio system other than the marine VHF radio may be applied to the present embodiment.

As illustrated in Fig. 1, the radio device 100 includes a main device 1, a plurality of operation terminals 2 (operation parts), an external operation terminal 3 (independent operation part), and an antenna 4. Note that, although a configuration in which three operation terminals 2 are provided is taken as an example of the present embodiment, the number of the operation terminals 2 is of course not limited to three.

The operation terminals 2 and the external operation terminal 3 are provided with respective unique IDs (identifiers) and have functions of performing operations related to tasks for DSC communication, as well as functions of normal transmission and reception. The ID of the external operation terminal 3 cannot be changed by a control section 11 described later. Further, the operation terminals 2 and the external operation terminal 3 each can be turned on and off independently of the main device 1.

The main device 1 includes the control section 11, a storage section 12, a communication section 13, a transmission/reception switching section 14, and an interface section 15 (recognition section).

The control section 11 has a function of controlling each section of the main device 1. Further, the control section 11 has, for example, an operation authority setting function, an ID setting function, a high-priority operation setting function, and an operation executing function.

The operation authority setting function is a function of setting authority that allows for performing an operation, on the operation terminal 2 or external operation terminal 3 that has first performed an operation related to a DSC task (hereinafter, referred to as "DSC operation"). The ID setting function is a function of automatically setting the IDs individually for the plurality of operation terminals 2. The high-priority operation setting function is a function of setting, on the operation terminal 2 or external operation terminal 3 selected, high priority for allowing the operation terminal 2 or external operation terminal 3 selected to preferentially perform the DSC operation. The operation executing function is a function of accepting operations performed by the operation terminals 2 and the external operation terminal 3 and executing the DSC task.

Note that, in the following descriptions, in a case where the operation terminal 2 and the external operation terminal 3 are not distinguished from each other, the operation terminal 2 and the external operation terminal 3 are each referred to simply as "terminal".

Here, the terminals are connected to the main device 1 so as to enable wired communication. Among the terminals, a terminal having the operation authority or a terminal set to be a high-priority terminal can perform the DSC operation. The operation authority and the high-priority terminal will be described later in detail.

The DSC task includes setting of various functions related to DSC, radio communication with another vessel, and DSC tasks from which distress transmission is excluded (which includes a reception task). Note that, the distress transmission is an emergency measure and thus can be exceptionally performed by a terminal having neither the operation authority nor the high priority.

The control section 11 includes an operation authority setting section 111, an ID changing section 112 (changing section), an execution section 113, an ID recognition section 114, and a high priority setting section 115.

The operation authority setting section 111 provides one terminal that has first performed the DSC operation, among the plurality of operation terminals 2 and the external operation terminal 3, with operation authority that allows the one terminal to perform a DSC operation until this DSC operation ends. Further, when the interface section 15 (described later) no longer recognizes the terminal having the operation authority, the operation authority setting section 111 cancels the operation authority.

When one of the plurality of operation terminals 2 is selected, the ID changing section 112 changes the ID provided to the operation terminal 2 selected to a high-priority ID (high-priority identifier). Further, the ID changing section 112 changes the IDs of the other operation terminals 2 unselected among the plurality of operation terminals 2 to non-high-priority IDs (non-high-priority identifiers) other than the high-priority ID. In addition, when the ID of the external operation terminal 3 is a high-priority ID, the ID changing section 112 refers to a management table (described later). If the ID changing section 112 finds the operation terminal 2 provided with a high-priority ID, the ID changing section 112 changes the high-priority ID of the operation terminal 2 to a non-high-priority ID.

The execution section 113 accepts an operation performed by the terminal provided with a high-priority ID and executes the above-described DSC task. For example, the execution section 113 controls the communication section 13 in order to perform DSC communication.

The ID recognition section 114 acquires each of the IDs provided to the terminals and recognizes whether each of the IDs is a high-priority ID or a non-high-priority ID. The ID recognition section 114 notifies the high priority setting section 115 of the IDs that the ID recognition section 114 has recognized.

When the ID of the external operation terminal 3 is a high-priority ID, the high priority setting section 115 regards the external operation terminal 3 as a high-priority terminal that is allowed to preferentially perform a DSC operation and gives high priority to the external operation terminal 3. Further, even when the ID of the external operation terminal 3 is a non-high-priority ID, selection of the external operation terminal 3 as a high-priority terminal through an operation (described later) by a user with use of the operation terminal 2 makes the external operation terminal 3 regarded as having a high-priority ID, and the high priority setting section 115 gives high priority to the external operation terminal 3. Basically, the high-priority terminal is a terminal provided with a high-priority ID. However, the external operation terminal 3 is, even when not provided with a high-priority ID, exceptionally treated as a high-priority terminal, provided that the external operation terminal 3 is set to be a high-priority terminal.

The storage section 12 is configured to store information required to control the radio device 100 and is constituted by a storage device such as a memory. In addition, the storage section 12 stores the management table. The management table is for managing the IDs of the operation terminals 2 and the ID of the external operation terminal 3 and for managing operation authority and high priority for the operation terminals 2 and the external operation terminal 3.

The management table stores IDs set individually for the operation terminals 2 connected to the main device 1. Further, in a case where the high priority setting section 115 has set, as a high-priority terminal, the external operation terminal 3 provided with a high-priority ID, the management table stores the setting. Furthermore, in a case where the high priority setting section 115 has set, as a high-priority terminal, the external operation terminal 3 provided with a non-high-priority ID, the management table stores the setting.

The communication section 13 includes a reception section 131 and a transmission section 132. The reception section 131 is configured to receive calling information based on DSC information, for example, a calling signal from another vessel, as well as to perform normal radio reception. The transmission section 132 is configured to transmit DSC information, for example, a calling signal to another vessel, as well as to perform normal radio transmission.

The transmission/reception switching section 14 outputs a transmission signal in, for example, a marine VHF radio band, to the antenna 4. The transmission signal is outputted from the transmission section 132, when the operation terminal 2 or the external operation terminal 3 performs a transmission operation. Further, the transmission/reception switching section 14 outputs a reception signal in, for example, a marine VHF radio band, to the reception section 131. The reception signal is received by the antenna 4, when neither the operation terminals 2 nor the external operation terminal 3 performs a transmission operation.

The interface section 15 performs transmission/reception of a signal to/from the operation terminals 2 and the external operation terminal 3. In a case where communication between the main device 1 and the operation terminals 2 and communication between the main device 1 and the external operation terminal 3 are in effect, for example, in a case where the operation terminals 2 and the external operation terminal 3 are turned on, the interface section 15 recognizes the operation terminals 2 and the external operation terminal 3. On the other hand, in a case where the communication between the main device 1 and the operation terminals 2 and the communication between the main device 1 and the external operation terminal 3 are not in effect, the interface section 15 recognizes neither the operation terminals 2 nor the external operation terminal 3. Such a case refers to, for example, a case where the operation terminals 2 and the external operation terminal 3 are turned off or a case where the communication between the main device 1 and the operation terminals 2 and the communication between the main device 1 and the external operation terminal 3 are cut off.

The operation terminals 2 each include a speaker 21 and a microphone 22 as input/output devices for transmission/reception. Further, the operation terminals 2 each include a display section 23 for displaying various pieces of information and an operation section 24 that enables various operation inputs. Furthermore, the operation terminals 2 each include a PTT switch 25 that enables a transmission operation. Furthermore, the operation terminals 2 each include a terminal control section 20 and an interface section 26.

The terminal control section 20 has a function of controlling each section of the operation terminal 2. Further, the terminal control section 20 includes a display control section 201 and an ID selection section 202. The display control section 201 causes the display section 23 to display each of the pieces of information in a predetermined format. The ID selection section 202 accepts an operation from the operation section 24 by the user and changes high-priority settings stored in the storage section 12 (management table) of the main device 1, in order to select the operation terminal 2 to be provided with the above-described high-priority ID.

The interface section 26 performs transmission/reception of a signal to/from the main device 1. The interface section 26 is connected to the interface section 15 of the main device 1 via a cable 27. The cable 27 includes a data line, an AF line, a PTT key line, and the like. The operation terminals 2 each can be connected to the main device 1 via the cable 27 having a long length of several tens of meters. This enables the operation terminals 2 to be positioned apart from the main device 1 in a vessel.

The external operation terminal 3 is connected to the main device 1 via a cable other than the cable 27. This enables the external operation terminal 3 to be positioned apart from the main device 1 in a vessel.

### <Appearance Configuration of Operation Terminal>

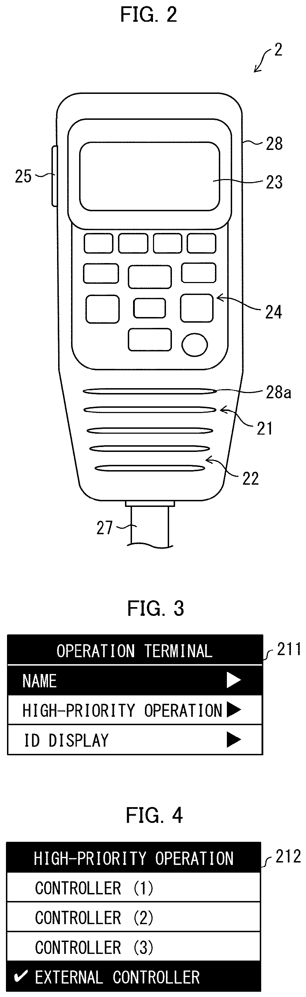

Fig. 2 is a front view illustrating an appearance configuration of the operation terminal 2 connected to the main device 1 of the radio device 100.

As illustrated in Fig. 2, the operation terminal 2 includes a case 28. The case 28 has an operation surface on a side on which the user performs an operation. The case 28 has one end connected to the cable 27 and on this one-end side, the speaker 21 and the microphone 22 are provided. A sound outputted from the speaker 21 and a sound inputted to the microphone 22 pass through a plurality of slits 28a disposed on the operation surface of the case 28.

The display section 23 is disposed on an other-end side of the operation surface of the case 28. The display section 23 is constituted by, for example, a liquid-crystal display device and has a rectangular display surface.

The operation part 24 is disposed in an intermediate area on the operation surface of the case 28. The operation part 24 includes operation keys such as movement keys, a menu key, an enter key, and a clear key. Note that a distress key is disposed on a back surface of the case 28, which is located opposite to the operation surface.

The movement keys are operation keys for moving an input position on a screen displayed on the display section 23, in left, right, up, and down directions. The menu key is an operation key for causing the display section 23 to display a menu screen. The movement keys for the movement in up and down directions are used also to select an operation channel. The enter key is an operation key for deciding a matter selected, inputted, or the like. The clear key is an operation key for canceling a function and a setting. The distress key is an operation key for transmitting a distress call (distress signal).

The PTT switch 25 is disposed in the vicinity of the display section 23 on one side surface of the case 28.

### <Configuration of Display Screen>

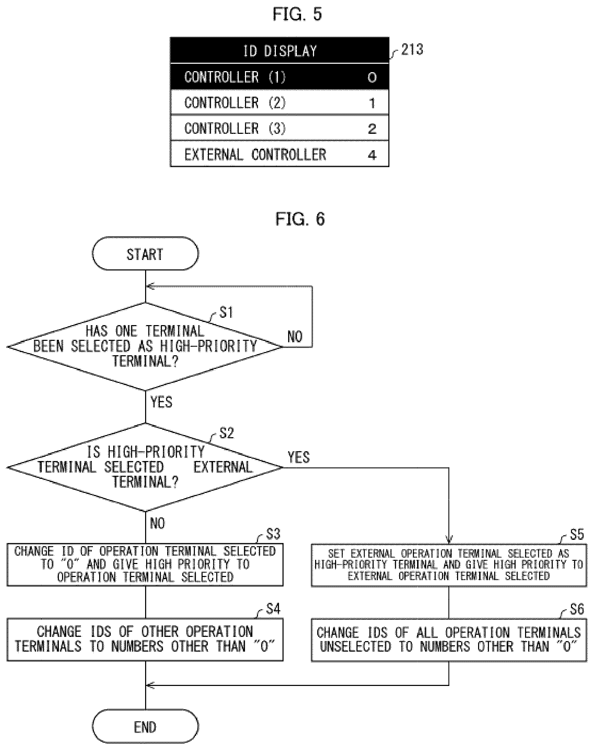

Fig. 3 is a view illustrating a menu screen 211 which is displayed on the display section 23 of the operation terminal 2 and which enables selection of various settings related to IDs of the operation terminals 2. Fig. 4 is a view illustrating a selection screen 212 which is displayed on the display section 23 and which enables selection of the operation terminal 2 or the external operation terminal 3 on which high priority is to be set. Fig. 5 is a view illustrating an ID display screen 213 which is displayed on the display section 23 and which displays the IDs of the operation terminals 2 and the external operation terminal 3 (that are hereinafter referred to simply as "terminals").

The display control section 201 of the operation terminal 2 causes the display section 23 to display the menu screen 211 illustrated in Fig. 3, the selection screen 212 illustrated in Fig. 4, or the ID display screen 213 illustrated in Fig. 5.

The menu screen 211 is a screen which enables selection of various items related to the IDs of the operation terminals 2. The item "name" is an item for changing a present screen to a name setting screen (not illustrated) for inputting a name to be provided to the operation terminal 2 and setting the name. The item "high-priority operation" is an item for changing the present screen to the selection screen 212 which enables selection of the operation terminal 2 or external operation terminal 3 to be given high priority. The item "ID display" is an item for changing the present screen to the ID display screen 213.

The selection screen 212 includes respective names provided to the terminals, in order to enable selection of one of the terminals as a high-priority terminal to be provided with a high-priority ID.

The ID display screen 213 is a screen for displaying the respective IDs provided to the terminals. The ID display screen 213 displays numbers representing the IDs, on a right side of the terminal names.

### <Setting of ID and Acceptance of Operation>

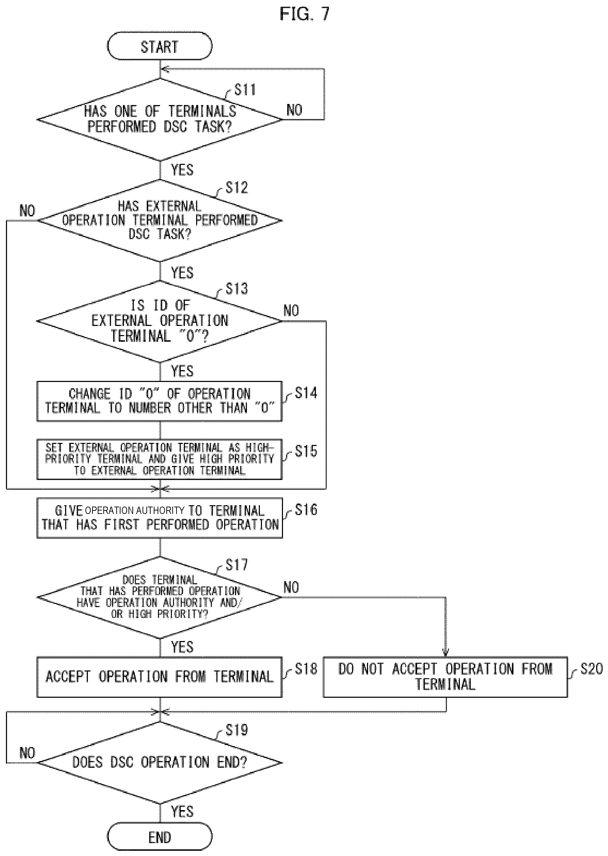

The following will describe change of IDs by the radio device 100 and an acceptance process that is performed, by the radio device 100, for operations from the operation terminals 2 and the external operation terminal 3 (communication control method). Fig. 6 is a flowchart illustrating a process procedure of setting of the IDs of the operation terminals 2, by the radio device 100. Fig. 7 is a flowchart illustrating a process procedure of acceptance of operations from terminals, by the radio device 100.

First, the following will describe the change of the IDs. As illustrated in Fig. 6, the ID changing section 112 of the control section 11 determines whether one of the terminals connected to the main device 1 has been selected as a high-priority terminal (step S1). The ID changing section 112 is configured to receive, as a selection signal, the ID of the operation terminal 2 selected with use of the ID selection section 202 of the operation terminal 2, and configured to, on the basis of the selection signal, recognize the operation terminal 2 selected as a high-priority terminal.

In a case where, at the step S1, the ID changing section 112 determines that none of the terminals has been selected as a high-priority terminal (NO), on the basis of a result of the recognition of the IDs by the ID recognition section 114, the ID changing section 112 continuously performs the determination. In a case where, at the step S1, the ID changing section 112 determines that one of the terminals has been selected as a high-priority terminal (YES), the ID changing section 112 determines whether the high-priority terminal selected is the external operation terminal 3 (step S2). In a case where, at the step S2, the ID changing section 112 determines that the high-priority terminal selected is not the external operation terminal 3 (NO), the ID changing section 112 changes the ID of the operation terminal 2 selected to the number "0", which is a high-priority ID, and give high priority to the operation terminal 2 selected (step S3; changing step). Then, the ID changing section 112 changes the IDs of the other operation terminals 2 that have not been selected as a high-priority terminal to numbers other than "0" (step S4; changing step), and the process is ended.

In a case where, at the step S2, the ID changing section 112 determines that the high-priority terminal selected is the external operation terminal 3 (YES), the high priority setting section 115 sets, as a high-priority terminal, the external operation terminal 3 selected, and gives high priority to the external operation terminal 3 selected (step S5). Then, the ID changing section 112 changes the IDs of all the operation terminals 2 that have not been selected as a high-priority terminal to numbers other than "0" (step S6), and the process is ended.

Further, when, at the step S4, the ID changing section 112 changes the ID of another operation terminal 2 to the number "0", the ID changing section 112 deprives, of operation authority, the operation terminal 2 that, until the change, has had an ID set to "0". Furthermore, when, at the step S6, the ID changing section 112 changes the IDs of all the operation terminals 2 to the numbers other than "0", the ID changing section 112 deprives, of operation authority, the operation terminal 2 that, until the change, has had an ID set "0".

Next, the following will describe an acceptance process for an operation. As illustrated in Fig. 7, the operation authority setting section 111 of the control section 11 determines whether one of the terminals connected to the main device 1 has performed an operation related to a DSC task (step S11). In a case where, at the step S11, the operation authority setting section 111 determines that none of the terminals has performed an operation related to a DSC task (NO), the operation authority setting section 111 further continues to perform the process at the step S11.

In a case where, at the step S11, the operation authority setting section 111 determines that one of the terminals has performed an operation related to a DSC task (YES), the ID recognition section 114 of the control section 11 determines whether the external operation terminal 3 has performed the operation related to the DSC task (step S12). The determination of whether the external operation terminal 3 has performed the DSC operation, by the ID recognition section 114 is performed on the basis of an external operation terminal ID sent together with a DSC operation signal from the external operation terminal 3. To the external operation terminal ID, for example, a code unique to the external operation terminal 3 is attached. This enables the ID changing section 112 to recognize that the terminal that has performed the operation is the external operation terminal 3.

In a case where, at the step S12, the ID recognition section 114 determines that the external operation terminal 3 has performed the operation related to the DSC task (YES), the ID recognition section 114 determines whether the ID of the external operation terminal 3 is "0" (step S13). In a case where, at the step S13, the ID of the external operation terminal 3 is determined to be "0" (YES) by the ID recognition section 114 and any one of the operation terminals 2 is provided with the ID "0", the ID changing section 112 changes, the ID "0" of the operation terminal 2 to a number other than "0" in the management table (step S14).

When the high priority setting section 115 is then notified of the change of the ID by the ID changing section 112, the high priority setting section 115 sets the external operation terminal 3 as a high-priority terminal in the management table, and gives high priority to the external operation terminal 3 (step S15). The operation authority setting section 111 then provides operation authority to the terminal as a terminal that has first performed the operation related to the DSC task (step S16). The operation authority setting section 111 provides operation authority to the terminal in the management table on the basis of an operation terminal ID sent together with a DSC operation signal from the terminal. Subsequently, the execution section 113 determines whether a terminal which has performed a DSC operation has operation authority and/or high priority (step S17). In a case where, at the step S17, the execution section 113 determines that the terminal which has performed the operation has operation authority and/or high priority (YES), the execution section 113 accepts the DSC operation performed by the terminal (step S18).

In this state, the execution section 113 can accept the DSC operation from the terminal and execute an operation related to a DSC task (execution step). Then, the execution section 113 determines whether the DSC operation by the terminal has ended (step S19). In a case where, at the step S19, the execution section 113 determines that the DSC operation by the terminal has ended (YES), the process is ended. On the other hand, in a case where, at the step S19, the execution section 113 determines that the DSC operation by the terminal has not ended (NO), the execution section 113 continues with the process.

In a case where, at the step S13, the ID recognition section 114 determines that the ID of the external operation terminal 3 is not "0" (NO), the process moves to the step S16. In a case where, at the step S17, the execution section 113 determines that the terminal that has performed the operation has neither operation authority nor high priority (NO), the execution section 113 does not accept the DSC operation performed by the terminal (step S20), and the process moves to the step S19. On the other hand, in a case where, at the step S12, the ID recognition section 114 determines that the external operation terminal 3 has not performed the operation related to the DSC task (NO), the process moves to the step S16.

As described above, a terminal selected as a high-priority terminal, among the operation terminals 2 and the external operation terminal 3, is given high priority, and a terminal that has first performed a DSC operation, among the terminals, is provided with operation authority.

### <Effect of Embodiments>

The radio device 100 in accordance with the present embodiment includes the plurality of operation terminals 2 and the control section 11, which includes the ID changing section 112 and the execution section 113. When one of the plurality of operation terminals 2 is selected, the ID changing section 112 changes the ID provided to the operation terminal 2 selected to a high-priority ID and changes the IDs of the operation terminals 2 unselected to non-high-priority IDs. The execution section 113 accepts an operation performed by the operation terminal 2 provided with the high-priority ID and executes a DSC task.

According to the above configuration, the ID of the one operation terminal 2 selected is changed to a high-priority ID and the IDs of the operation terminals 2 unselected are changed to non-high-priority IDs. This can prevent, for example, assignment of duplicate IDs to the operation terminals 2 and absence of an operation terminal 2 provided with a high-priority ID.

Further, the radio device 100 includes the external operation terminal 3. In addition, when the ID of the external operation terminal 3 is a high-priority ID, the ID changing section 112 changes the ID of the operation terminal 2 provided with a high-priority ID to a non-high-priority ID.

According to the above configuration, it is possible to prevent assignment of duplicate high-priority IDs to the operation terminal 2 and the external operation terminal 3.

Further, the control section 11 of the radio device 100 includes the high priority setting section 115. When, even in a case where the ID of the external operation terminal 3 is a non-high-priority ID, the external operation terminal 3 is set to be a high-priority terminal, the high priority setting section 115 regards the external operation terminal 3 as having a high-priority ID and gives high priority to the external operation terminal 3.

According to the above configuration, even in a case where the ID of the external operation terminal 3 cannot be changed to a high-priority ID, it is possible to treat the external operation terminal 3 substantially as being provided with a high-priority ID.

Further, the control section 11 of the radio device 100 includes the operation authority setting section 111. The operation authority setting section 111 provides a terminal that has first performed a DSC operation, among the plurality of terminals, with operation authority that allows the terminal to perform the DSC operation until the DSC operation ends.

According to the above configuration, it is possible to also operate the operation terminal 2 having operation authority as well as the operation terminal 2 provided with a high-priority ID.

Further, the radio device 100 includes the interface section 15. When the interface section 15 recognizes neither the operation terminals 2 nor the external operation terminal 3 any longer, the operation authority setting section 111 cancels the operation authority.

The operation terminals 2 can be individually turned off. Thus, when the main device 1 and the operation terminals 2 are set to be turned on or off in conjunction with each other, turning one of the operation terminals 2 off causes the main device 1 and the other operation terminals 2 to be turned off. Alternatively, the main device 1 and the operation terminals 2 may be set such that when all the operation terminals 2 are turned off, the main device 1 is turned off. Only an operation terminal 2 not in use may be turned off in order to reduce a power consumption.

In a case where the operation terminal 2 having operation authority is turned off, the terminal having operation authority becomes absent. However, according to the above configuration, it is possible to prevent the operation authority from being kept by a terminal that the interface section 15 does not recognize any longer due to, for example, inactivation of the main device 1 or cutoff of communication between the main device 1 and the terminals. This enables a terminal that performs an operation next time, among the terminals, to be provided with operation authority.

### <Variation>

The above-described embodiment discussed the configuration in which the DSC operation is performed by the operation terminal 2 and the external operation terminal 3. However, this should not be construed as a limitation. In the above-described embodiment, the main device 1 may be configured to have an operation function equivalent to those of the operation terminals 2 and the external operation terminal 3, by being provided with an operation panel. In a case where the main device 1 has such a configuration, the main device 1 functions as an operation part as in the case of the terminals. Further, the terminals each may be connected to the main device 1 wirelessly rather than via a cable.

### [Software Implementation Example]

Functions of the radio device 100 can be realized by a program for causing a computer to function as the radio device 100. The program causes the computer to function as control blocks (in particular, the operation authority setting section 111, the ID changing section 112, the execution section 113, the ID recognition section 114, and the high priority setting section 115) of the control section 11 of the radio device 100. That is, the program is a communication control program.

In this case, the control section 11 includes at least one CPU and at least one main memory as hardware for executing the program. The functions described in the above embodiments are realized by executing the program with use of the at least one CPU and the at least one main memory.

The program can be stored in one or more non-transitory computer-readable storage media. The one or more storage media may be included in the radio device 100 or may not be included in the radio device 100. In the latter case, the program can be supplied to or made available to the radio device 100 via any wired or wireless transmission medium.

Further, section or all of the functions of the control blocks of the control section 11 can also be realized by a logic circuit. For example, an integrated circuit in which a logic circuit functioning as the control blocks is formed is included in the scope of the present invention.

### [Supplementary Note]

The present invention is not limited to the embodiments, but can be altered by a person skilled in the art within the scope of the claims.

### Reference Signs List

- 2: Operation terminal (operation part)
- 3: External operation terminal (independent operation part)
- 13: Communication section
- 15: Interface section (recognition section)
- 100: Radio device
- 111: Operation authority setting section
- 112: ID changing section (changing section)
- 113: Execution section
- 115: High priority setting section

## Claims

1. A radio device (100) comprising:
a plurality of operation terminals (2) each of which is provided with an identifier and each of which is configured to perform an operation related to a task for digital selective calling, DSC, communication;
a changing section (112) configured to, when one of the plurality of operation terminals (2) is selected, (i) change the identifier of the operation terminal (2) selected to a high-priority identifier provided with high priority that allows the operation terminal selected (2) to preferentially perform the operation and (ii) change the identifier of each of all operation terminals other than the selected one among the plurality of operation terminals to a non-high-priority identifier other than the high-priority identifier;
an external operation terminal (3) which is provided with an unchangeable identifier that is unchangeable by the changing section (112) and which is configured to perform an operation related to the DSC communication;
an execution section (113) configured to accept an operation performed by the operation terminal (2) provided with the high-priority identifier and execute the task; and
a high priority setting section (115) configured to, in a case where the unchangeable identifier of the external operation terminal (3) is the non-high-priority identifier, and the external operation terminal (3) is selected as a terminal provided with the high priority through an operation by a user with use of one of the plurality of operation terminals (2), provide the high priority to the external operation terminal (3).

2. The radio device (100) according to claim 1, wherein
the changing section (112) is configured to, when the unchangeable identifier of the external operation terminal (3) is the high-priority identifier, change the identifier of the operation terminal (2) provided with the high-priority identifier to the non-high-priority identifier.

3. The radio device(100) according to claim 2, further comprising an operation authority setting section (111) configured to provide one operation terminal (2) that has first performed the operation among the plurality of operation terminals (2) and the external operation terminal (3), with operation authority that allows the one operation terminal (2) to preferentially perform the operation until the operation ends.

4. The radio device (100) according to claim 3, further comprising a recognition section (114) configured to, when communication performed by the plurality of operation terminals (2) and communication performed by the external operation terminal (3) are in effect, recognize the plurality of operation terminals (2) and the external operation terminal (3),
the operation authority setting section (111) being configured to, when the recognition section (114) recognizes neither the plurality of operation terminals (2) nor the external operation terminal (3) any longer, cancel the operation authority provided to one of the plurality of operation terminals (2) and the external operation terminal (3).

5. A communication control program for causing a computer to function as the radio device (100) according to any one of claims 1 to 4, the communication control program causing the computer to function as each of the foregoing terminals or sections.

6. A communication control method comprising the steps of:
when one of a plurality of operation terminals (2) each of which is provided with an identifier and each of which is configured to perform an operation related to a task for digital selective calling, DSC, communication is selected, (i) changing (S3) the identifier provided to the operation terminal (2) selected to a high-priority identifier that allows the operation terminal (2) selected to preferentially perform the operation and (ii) changing the identifier (S4) of each of the operation terminal other than the selected one among the plurality of operation terminals to a non-high-priority identifier other than the high-priority identifier;
performing an operation related to the DSC communication using an external operation terminal (3), which is provided with an unchangeable identifier that is unchangeable by the changing section;
accepting the operation performed by the operation terminal provided with the high-priority identifier and executing the task; and
in a case where the unchangeable identifier of the external operation terminal (3) is the non-high-priority identifier, and the external operation terminal (3) is selected as a terminal provided with the high priority through an operation by a user with use of one of the plurality of operation terminals, providing (S5) the high priority to the external operation terminal (3).

## Patentansprüche

1. Funkvorrichtung (100), umfassend:
eine Mehrzahl von Bedienanschlüssen (2), von welchen jeder mit einem Identifikator bereitgestellt ist und von welchen jeder dazu eingerichtet ist, eine Bedienung im Zusammenhang mit einer Aufgabe für eine digitale selektive Anruf -, DSC, Kommunikation durchzuführen;
einen Änderungsbereich (112), welcher dazu eingerichtet ist, wenn einer der Mehrzahl von Bedienanschlüssen (2) selektiert ist, (i) den Identifikator des selektierten Bedienanschlusses (2) in einen Hochprioritätsidentifikator zu ändern, welcher mit hoher Priorität bereitgestellt ist, was dem selektierten Bedienanschluss (2) ermöglicht, die Bedienung bevorzugt durchzuführen, und (ii) den Identifikator jeder der Bedienanschlüsse außer des Selektierten unter der Mehrzahl von Bedienanschlüssen in einen Nicht- Hochprioritätsidentifikator, außer den Hochprioritätsidentifikator, zu ändern;
einen externen Bedienanschluss (3), welcher mit einem unveränderlichen Identifikator bereitgestellt ist, welcher durch den Änderungsbereich (112) unveränderbar ist und welcher dazu eingerichtet ist, eine Bedienung im Zusammenhang mit der DSC-Kommunikation durchzuführen;
einen Ausführungsbereich (113), welcher dazu eingerichtet ist, eine Bedienung, welche von dem Bedienanschluss (2) durchgeführt wird, welcher mit dem Hochprioritätsidentifikator bereitgestellt ist, zu akzeptieren und die Aufgabe auszuführen; und
einen Hochprioritäts-Festlegungsbereich (115), welcher dazu eingerichtet ist, in einem Fall, in welchem der unveränderliche Identifikator des externen Bedienanschlusses (3) der Nicht-Hochprioritätsidentifikator ist, und der externe Bedienanschluss (3) als ein Anschluss selektiert ist, welcher mit der hohen Priorität durch eine Bedienung durch einen Benutzer unter Verwendung eines der Mehrzahl von Bedienanschlüssen (2) bereitgestellt ist, die hohe Priorität dem externen Bedienanschluss (3) bereitzustellen.

2. Funkvorrichtung (100) nach Anspruch 1, wobei
der Änderungsbereich (112) dazu eingerichtet ist, wenn der unveränderliche Identifikator des externen Bedienanschlusses (3) der Hochprioritätsidentifikator ist, den Identifikator des Bedienanschlusses (2), welcher mit dem Hochprioritätsidentifikator bereitgestellt ist, in den Nicht-Hochprioritätsidentifikator zu ändern.

3. Funkvorrichtung (100) nach Anspruch 2, ferner umfassend einen Bedienungsberechtigungs-Festlegungsbereich (111), welcher dazu eingerichtet ist, einen Bedienanschluss (2), welcher zunächst die Bedienung unter der Mehrzahl von Bedienanschlüssen (2) und des externen Bedienanschlusses (3) durchgeführt hat, mit einer Bedienungsberechtigung bereitzustellen, welche dem einen Bedienanschluss (2) ermöglicht, die Bedienung bevorzugt durchzuführen, bis die Bedienung beendet ist.

4. Funkvorrichtung (100) nach Anspruch 3, ferner umfassend einen Erkennungsbereich (114), welcher dazu eingerichtet ist, wenn eine Kommunikation, welche von der Mehrzahl von Bedienanschlüssen (2) durchgeführt wird, und eine Kommunikation, welche von dem externen Bedienanschluss (3) durchgeführt wird, in Wirkung sind, die Mehrzahl von Bedienanschlüssen (2) und den externen Bedienanschluss (3) zu erkennen,
wobei der Bedienungsberechtigungs-Festlegungsbereich (111) dazu eingerichtet ist, wenn der Erkennungsbereich (114) weder die Mehrzahl von Bedienanschlüssen (2) noch den externen Bedienanschluss (3) nicht mehr erkennt, die Bedienungsberechtigung, welche einem aus der Mehrzahl von Bedienanschlüssen (2) und des externen Bedienanschlusses (3) bereitgestellt ist, aufzuheben.

5. Kommunikationssteuerungsprogramm zum Veranlassen eines Computers, als die Funkvorrichtung (100) nach einem der Ansprüche 1 bis 4 zu fungieren, wobei das Kommunikationssteuerungsprogramm den Computer dazu veranlasst, als jeder der vorhergehenden Bedienanschlüsse oder Bereiche zu fungieren.

6. Kommunikationssteuerungsverfahren, umfassend die Schritte aus:
wenn einer der Mehrzahl von Bedienanschlüssen (2), von welchen jeder mit einem Identifikator bereitgestellt ist und von welchen jeder dazu eingerichtet ist, eine Bedienung im Zusammenhang mit einer Aufgabe für eine digitale selektive Anruf -, DSC, Kommunikation durchzuführen, selektiert wird, (i) Ändern (S3) des Identifikators, welcher dem selektierten Bedienanschluss (2) bereitgestellt ist, in einen Hochprioritätsidentifikator, welcher ermöglicht, dass der selektierte Bedienanschluss (2), die Bedienung bevorzugt durchführt, und (ii) Ändern des Identifikators (S4) jedes des Bedienanschlusses außer des Selektierten unter der Mehrzahl von Bedienanschlüssen in einen Nicht-Hochprioritätsidentifikator, außer den Hochprioritätsidentifikator;
Durchführen einer Bedienung im Zusammenhang mit der DSC-Kommunikation unter Verwendung eines externen Bedienanschlusses (3), welcher mit einem unveränderlichen Identifikator bereitgestellt ist, welcher durch den Änderungsbereich unveränderlich ist;
Akzeptieren der Bedienung, welche von dem Bedienanschluss durchgeführt wird, welcher mit dem Hochprioritätsidentifikator bereitgestellt ist und Ausführen der Aufgabe; und
in einem Fall, in welchem der unveränderliche Identifikator des externen Bedienanschlusses (3) der Nicht-Hochprioritätsidentifikator ist und der externe Bedienanschluss (3) durch eine Bedienung durch einen Benutzer unter Verwendung eines der Mehrzahl von Bedienanschlüssen als ein Anschluss selektiert wird, welcher mit der hohen Priorität bereitgestellt ist, Bereitstellen (S5) der hohen Priorität an den externen Bedienanschluss (3).

## Revendications

1. Dispositif radio (100) comprenant :
une pluralité de terminaux d'opération (2), dont chacun est muni d'un identifiant et dont chacun est configuré pour réaliser une opération relative à une tâche pour une communication d'appel sélectif numérique, DSC ;
une section de modification (112) configurée pour, lorsque l'un de la pluralité de terminaux d'opération (2) est sélectionné, (i) modifier l'identifiant du terminal d'opération (2) sélectionné en un identifiant de haute priorité muni d'une haute priorité qui permet au terminal d'opération (2) sélectionné de réaliser préférentiellement l'opération et (ii) modifier l'identifiant de chacun de tous les terminaux d'opération autres que le terminal sélectionné parmi la pluralité de terminaux d'opération en un identifiant qui n'est pas de haute priorité autre que l'identifiant de haute priorité ;
un terminal d'opération externe (3) qui est muni d'un identifiant non modifiable qui n'est pas modifiable par la section de modification (112) et qui est configuré pour réaliser une opération relative à la communication DSC ;
une section d'exécution (113) configurée pour accepter une opération réalisée par le terminal d'opération (2) muni de l'identifiant de haute priorité et exécuter la tâche ; et
une section d'établissement de haute priorité (115) configurée pour, dans un cas où l'identifiant non modifiable du terminal d'opération externe (3) est l'identifiant qui n'est pas de haute priorité, et le terminal d'opération externe (3) est sélectionné en tant que terminal muni de la haute priorité par le biais d'une opération par un utilisateur en utilisant l'un de la pluralité de terminaux d'opération (2), fournir la haute priorité au terminal d'opération externe (3).

2. Dispositif radio (100) selon la revendication 1, dans lequel
la section de modification (112) est configurée pour, lorsque l'identifiant non modifiable du terminal d'opération externe (3) est l'identifiant de haute priorité, modifier l'identifiant du terminal d'opération (2) muni de l'identifiant de haute priorité en l'identifiant qui n'est pas de haute priorité.

3. Dispositif radio (100) selon la revendication 2, comprenant en outre une section d'établissement d'autorité d'opération (111) configurée pour munir un terminal d'opération (2), qui a réalisé en premier l'opération parmi la pluralité de terminaux d'opération (2) et le terminal d'opération externe (3), d'une autorité d'opération qui permet audit terminal d'opération (2) de réaliser préférentiellement l'opération jusqu'à ce que l'opération se termine.

4. Dispositif radio (100) selon la revendication 3, comprenant en outre une section de reconnaissance (114) configurée pour, lorsqu'une communication réalisée par la pluralité de terminaux d'opération (2) et une communication réalisée par le terminal d'opération externe (3) sont effectives, reconnaître la pluralité de terminaux d'opération (2) et le terminal d'opération externe (3),
la section d'établissement d'autorité d'opération (111) étant configurée pour, lorsque la section de reconnaissance (114) ne reconnaît plus ni la pluralité de terminaux d'opération (2) ni le terminal d'opération externe (3), annuler l'autorité d'opération fournie à l'un parmi la pluralité de terminaux d'opération (2) et le terminal d'opération externe (3).

5. Programme de contrôle de communication pour amener un ordinateur à fonctionner comme le dispositif radio (100) selon l'une quelconque des revendications 1 à 4, le programme de contrôle de communication amenant l'ordinateur à fonctionner comme chacun des terminaux précédents ou chacune des sections précédentes.

6. Procédé de contrôle de communication comprenant les étapes consistant à :
lorsque l'un d'une pluralité de terminaux d'opération (2), dont chacun est muni d'un identifiant et dont chacun est configuré pour réaliser une opération relative à une tâche pour une communication d'appel sélectif numérique, DSC, est sélectionné, (i) modifier (S3) l'identifiant fourni au terminal d'opération (2) sélectionné en un identifiant de haute priorité qui permet au terminal d'opération (2) sélectionné de réaliser préférentiellement l'opération et (ii) modifier l'identifiant (S4) de chacun parmi le terminal d'opération autre que le terminal sélectionné parmi la pluralité de terminaux d'opération en un identifiant qui n'est pas de haute priorité autre que l'identifiant de haute priorité ;
réaliser une opération relative à la communication DSC à l'aide d'un terminal d'opération externe (3), qui est muni d'un identifiant non modifiable qui n'est pas modifiable par la section de modification ;
accepter l'opération réalisée par le terminal d'opération muni de l'identifiant de haute priorité et exécuter la tâche ; et
dans un cas où l'identifiant non modifiable du terminal d'opération externe (3) est l'identifiant qui n'est pas de haute priorité, et le terminal d'opération externe (3) est sélectionné en tant que terminal muni de la haute priorité par le biais d'une opération par un utilisateur en utilisant l'un de la pluralité de terminaux d'opération, fournir (S5) la haute priorité au terminal d'opération externe (3).
